# EUROPEAN PATENT APPLICATION

(11) **EP 4 650 277 A2**
(43) Date of publication of application: **19.11.2025**
(21) Application number: 25176114.4
(22) Date of filing: 13.05.2025
(51) Int. Cl.: B64D 13/02, F04D 29/056, F04D 17/10, F04D 17/12, F04D 29/051, F04D 29/053, F04D 29/057, F04D 29/26, F04D 29/28, F04D 29/42, F04D 29/62, F04D 25/02

(54) **UNIDIRECTIONAL THRUST AIR CYCLE MACHINE ARRANGEMENT WITH ASYMMETRIC THRUST BEARINGS**

(30) Priority: 13.05.2024 US 202418662195
(71) Applicant: Hamilton Sundstrand Corporation, Charlotte, NC 28217-4578 (US)
(72) Inventor: SCHUSTER, Zachary Alex, Chicago, IL (US); SHAKIL, Ali, West Hartford, CT (US); GIULIANO, John, North Granby, CT (US); CLAVETTE, Jeremy, Farmington, CT (US)
(74) Representative: Dehns

(57) **Abstract**

An air cycle machine (ACM) is provided and includes a rotor (110) including rear and forward faces (112, 113) and a central portion (114) interposed between the rear and forward faces with outwardly extending blades (115). The rotor defines a pocket (170) having an open end (172) and forms a foil bearing shaft. The ACM further includes an inlet housing (120) partially surrounding the rotor, an outlet housing (130) including a forward face (132) and a bearing support element (133) extending from the forward face and being receivable in the pocket via the open end, one or more first bearings (140) disposed within the bearing support element to support rotation of the foil bearing shaft, a second bearing (150) interposed between the forward face of the outlet housing and the rear face of the rotor and a third bearing (160) interposed between the forward face of the rotor and the inlet housing.

## Description

### BACKGROUND

The present invention relates to air cycle machines (ACMs) and, more particularly, to axisymmetric thrust bearings of a rotor hub of an ACM.

In aeronautics, ACMs are used in environmental control systems in aircraft to condition air for delivery to an aircraft cabin. Conditioned air is air at a temperature, pressure and humidity desirable for aircraft passenger comfort and safety. At or near ground level, the ambient air temperature and/or humidity is often sufficiently high that the air must be cooled as part of the conditioning process before being delivered to the aircraft cabin. At flight altitude, ambient air is often far cooler than desired, but at such a low pressure that it must be compressed to an acceptable pressure as part of the conditioning process. Compressing ambient air at flight altitude heats the resulting pressured air sufficiently that it must be cooled, even if the ambient air temperature is very low. Thus, under most conditions, heat must be removed from air by the air cycle machine before the air is delivered to the aircraft cabin. A cabin air compressor can be used to compress air for use in an environmental control system. The cabin air compressor includes a motor to drive a compressor section that in turn compresses air flowing through the cabin air compressor.

### BRIEF DESCRIPTION

According to an aspect of the invention, an air cycle machine (ACM) is provided and includes a rotor including rear and forward faces and a central portion interposed between the rear and forward faces with outwardly extending blades. The rotor defines a pocket having an open end and forms a foil bearing shaft. The ACM further includes an inlet housing partially surrounding the rotor, an outlet housing including a forward face and a bearing support element extending from the forward face and being receivable in the pocket via the open end, one or more first bearings disposed within the bearing support element to support rotation of the foil bearing shaft, a second bearing interposed between the forward face of the outlet housing and the rear face of the rotor and a third bearing interposed between the forward face of the rotor and the inlet housing.

In embodiments, the inlet housing partially surrounds the rotor and the third bearing is interposed between the forward face of the rotor and a proximal portion of the inlet housing.

In embodiments, the central portion has an exterior surface with a non-linear profile from which the blades extend radially outwardly.

In embodiments, with the bearing support element received in the pocket, a first gap is defined between the forward face of the outlet housing and the rear face of the rotor and the second bearing is disposed within the first gap and a second gap is defined between the forward face of the rotor and the inlet housing and the third bearing is disposed within the second gap.

In embodiments, a closed end of the pocket is proximate to the forward face of the rotor.

In embodiments, the one or more first bearings are journal bearings.

In embodiments, the second bearing is a thrust bearing configured for primary axial load support.

In embodiments, the third bearing is an axisymmetric thrust bearing for secondary axial load support.

According to an aspect of the invention, an air cycle machine (ACM) is provided and includes first and second rotors, each of the first and second rotors including rear and forward faces and a central portion interposed between the rear and forward faces with outwardly extending blades, a shaft connecting the first and second rotors, one or more first bearings disposed on the shaft to support shaft rotation, a second bearing disposed on the rear face of the first rotor and a third bearing disposed on the forward face of the first rotor.

In embodiments, the central portion of each of the first and second rotors has an exterior surface with a non-linear profile from which the corresponding blades extend radially outwardly.

In embodiments, the first and second rotors define central bores and the shaft includes a first end receivable in the central bore of the first rotor, a second end receivable in the central bore of the second rotor and a central section interposed between the first and second ends. The central section includes a first shoulder that impinges against the rear face of the first rotor and a second shoulder that impinges against the forward face of the second rotor.

In embodiments, the one or more first bearings include a forward first bearing disposed about the central section and proximate to the first end and a rear first bearing disposed about the central section and proximate to the second end.

In embodiments, the one or more first bearings are journal bearings.

In embodiments, the second bearing is a thrust bearing configured for primary axial load support.

In embodiments, the third bearing is an axisymmetric thrust bearing for secondary axial load support.

According to an aspect of the invention, a method of assembling an air cycle machine (ACM) is provided and includes forming first and second rotors, each of the first and second rotors including rear and forward faces and a central portion interposed between the rear and forward faces with outwardly extending blades, disposing one or more first bearings on a shaft, disposing a second bearing on the rear face of the first rotor, disposing a third bearing on the forward face of the first rotor and connecting the first and second rotors by the shaft.

In embodiments, the shaft includes first and second ends and a central section interposed between the first and second ends, the disposing of the one or more first bearings on the shaft includes disposing a forward first bearing about the central section and proximate to the first end and disposing a rear first bearing about the central section and proximate to the second end and the connecting of the first and second rotors by the shaft includes inserting the first end in a central bore of the first rotor and inserting the second end in a central bore of the second rotor.

In embodiments, the one or more first bearings are journal bearings.

In embodiments, the second bearing is a thrust bearing configured for primary axial load support.

In embodiments, the third bearing is an axisymmetric thrust bearing for secondary axial load support.

Additional features and advantages are realized through the techniques of the present invention. Other embodiments and aspects of the invention are described in detail herein and are considered a part of the claimed technical concept. For a better understanding of the invention with the advantages and the features, refer to the description and to the drawings.

### BRIEF DESCRIPTION OF THE DRAWINGS

For a more complete understanding of this invention, reference is now made to the following brief description, taken in connection with the accompanying drawings and detailed description, wherein like reference numerals represent like parts:
FIG. 1 is a perspective view of an ACM with thrust bearings in accordance with embodiments;
FIG. 2 is a side view of the ACM of FIG. 1 in accordance with embodiments;
FIG. 3 is a side view of an ACM with a 2-wheel configuration in accordance with embodiments;
FIG. 4 is a perspective view of the ACM of FIG. 3 in accordance with embodiments;
FIG. 5 is a perspective view of the ACM of FIG. 3 in accordance with embodiments; and
FIG. 6 is a flow diagram illustrating a method of assembling an ACM in accordance with embodiments.

### DETAILED DESCRIPTION

ACM assemblies that are supported radially on hydrodynamic foil bearings traditionally couple a series of rotors with precision-machined shafts that are concentric to the hydrodynamic foil bearing supports. The hydrodynamic foil bearings serve to support radial and axial loads. In certain cases, the loads switch directions, such as when an axial load in a first direction switches to an axial load in a second direction opposite to the first direction. Therefore, a need arises for ACM assemblies that can react to load direction switching.

Thus, as will be described below, an ACM assembly is provided. The ACM assembly is designed to have unidirectional loading and this allows the ACM assembly to incorporate axisymmetric thrust bearings. The unidirectional loading is assured by the rotors of the ACM assembly being oriented in a same direction. The ACM assembly is supported under the unidirectional loading by a single robust thrust bearing. Where axial loading switches direction, an asymmetric secondary thrust bearing prevent high-friction rubbing between the rotor and stationary shrouds. In addition, a set of journal bearings is provided where the journal bearings act as radial supports for rotating components. This ensures that rotating components of the ACM assembly are sufficiently supported in all directions while resulting in a more compact ACM assembly than traditional arrangements.

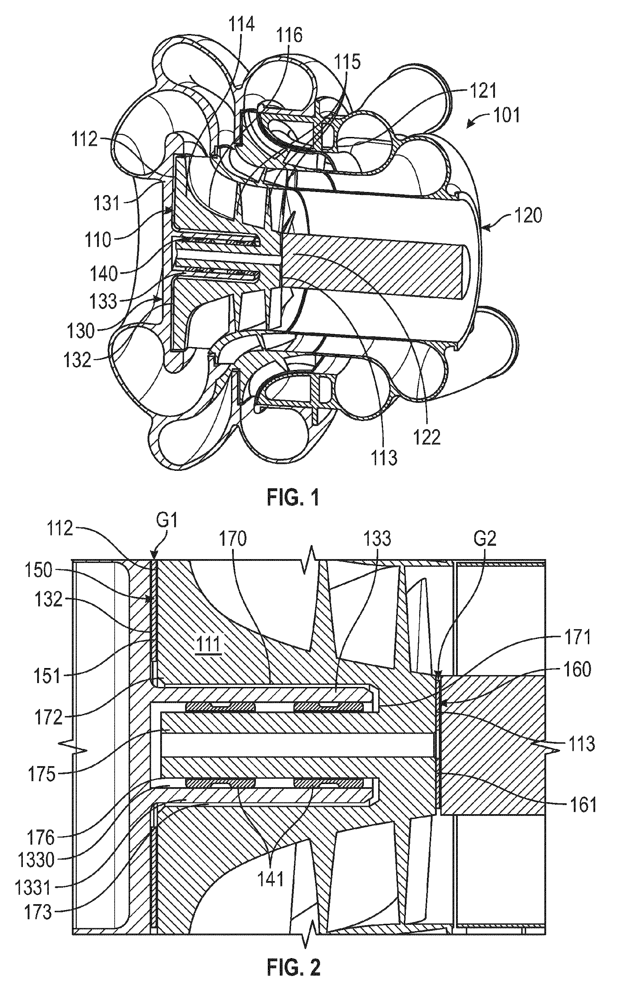

With reference to FIGS. 1 and 2, an ACM 101 is provided and includes a rotor 110, an inlet housing 120, an outlet housing 130, one or more first bearings 140, a second bearing 150 (see FIG. 2) and a third bearing 160 (see FIG. 2).

The rotor 110 includes a rotor hub 111. The rotor hub 111 includes a rear face 112, a forward face 113, a central portion 114 that is axially interposed between the rear face 112 and the forward face 113 and blades 115. The central portion 114 has an exterior surface 116, which may have a non-linear profile. The blades 115 extend radially outwardly from the exterior surface 116 of the central portion 114. The rotor hub 111 is also formed to define a pocket 170, which can be machined into the rotor hub 111. The pocket 170 is elongate and has a closed end 171 and an open end 172. The closed end 171 is proximate to the forward face 113. The open end 172 is open at a plane of the rear face 112. With the rotor hub 111 formed to define the pocket 170, the rotor hub 111 effectively forms or further includes a foil bearing shaft 175 integrally connected with an interior diameter of the rotor hub 111.

The inlet housing 120 partially surrounds the rotor 110 and includes an exterior portion 121 disposed about the blades 115 and a forward portion 122 that is proximal to the forward face 113.

The outlet housing 130 includes a planar base member 131 with a forward face 132 and a bearing support element 133. The bearing support element 133 extends from the forward face 132 of the planar base member 131 and can be hollow. The bearing support element 133 can be cylindrical and receivable in or insertable into the pocket 170 of the rotor hub 111. The foil bearing shaft 175 is similarly receivable in or insertable into the bearing support element 133.

With the bearing support element 133 received in the pocket 170 and with the foil bearing shaft 175 received in the bearing support element 133, an exterior facing surface 176 of the foil bearing shaft 175 faces an interior facing surface 1330 of the bearing support element 133 and an exterior facing surface 1331 of the bearing support element 133 faces an interior facing surface 173 of the pocket 170. Also, with the bearing support element 133 received in the pocket 170 and with the foil bearing shaft 175 received in the bearing support element 133, the rear face 112 of the rotor hub 111 is nearly adjacent to the forward face 132 of the planar base member 131. In this condition, gaps G1 and G2 may be defined between nearly adjacent surfaces of the rotor hub 111 of the rotor 110 and the outlet housing 130 (i.e., between the rear face 112 of the rotor hub 111 and the forward face 132 of the outlet housing 130) and between nearly adjacent surfaces of the rotor hub 111 of the rotor 110 and the inlet housing 120 (i.e., between the forward face 113 of the rotor hub 111 and the forward portion 122 of the inlet housing 120).

The one or more first bearings 140 are supportively disposed on or installed into the interior facing surface 1330 of the bearing support element 133 within the bearing support element 133 to bear against the exterior facing surface 176 of the foil bearing shaft 175 and to thereby support rotation of the foil bearing shaft 175 and the rotor 110. The one or more first bearings 14 may include or be provided as journal bearings 141 or, in some cases, as a set of hydrodynamic foil bearings. As will be understood by one of ordinary skill in the art, the one or more first bearings 140 can have other similar configurations.

The second bearing 150 can be provided as a thrust bearing 151 and is interposed in the gap G1 defined between the forward face 132 of the outlet housing 130 and the rear face 112 of the rotor hub 111 of the rotor 110. The second bearing 140 can be configured for primary axial load support of the rotor 110 to react to unidirectional thrust loading as shown in FIG. 1. The third bearing 160 can be provided as an axisymmetric thrust bearing 161 and is interposed in the gap G2 defined between the forward face 113 of the rotor hub 111 of the rotor 110 and the forward portion 122 of the inlet housing 120. The third bearing 160 can be configured for secondary axial load support of the rotor 110 to react to instances in which axial loading switches direction from the intended unidirectional thrust loading shown in FIG. 1.

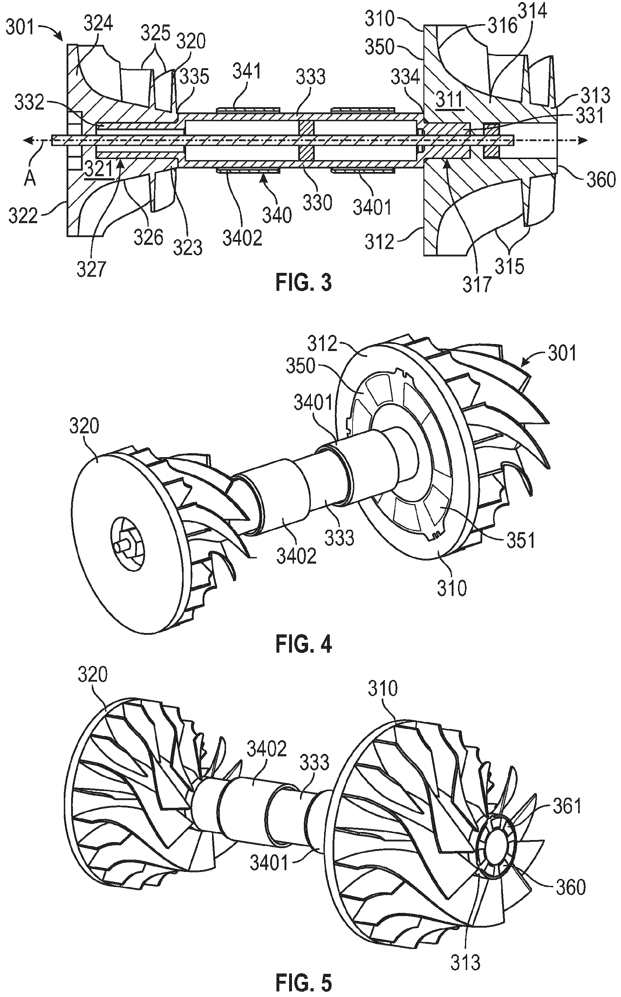

With reference to FIGS. 3-5, an ACM 301 is provided with a 2-wheel configuration and includes a first rotor 310, a second rotor 320, a shaft 330, one or more first bearings 340, a second bearing 350 and a third bearing 360. The first rotor 310 and the second rotor 320 are oriented in a same direction such that thrust loading will be acting in the direction of rear face 312 (to be described below) and rear face 322 (to be described below).

The first rotor 310 includes a rotor hub 311. The rotor hub 311 includes the rear face 312, a forward face 313, a central portion 314 that is axially interposed between the rear face 312 and the forward face 313 and blades 315. The central portion 314 has an exterior surface 316, which may have a non-linear profile. The blades 315 extend radially outwardly from the exterior surface 316 of the central portion 314. The first rotor 310 is also formed to define a central bore 317.

The second rotor 320 includes a rotor hub 321. The rotor hub 321 includes the rear face 322, a forward face 323, a central portion 324 that is axially interposed between the rear face 322 and the forward face 323 and blades 325. The central portion 324 has an exterior surface 326, which may have a non-linear profile. The blades 325 extend radially outwardly from the exterior surface 326 of the central portion 324. The second rotor 320 is also formed to define a central bore 327.

The shaft 330 is rotatable about a central longitudinal axis A thereof and connects the first rotor 310 and the second rotor 320. The shaft 330 includes a first end 331, which is receivable in the central bore 317 of the first rotor 310, a second end 332, which is receivable in the central bore 327 of the second rotor 320, and a central section 333 axially interposed between the first end 331 and the second end 332. The central section 333 includes a first shoulder 334 that impinges against the rear face 312 of the rotor hub 311 of the first rotor 310 and a second shoulder 335 that impinges against the forward face 323 of the rotor hub 321 of the second rotor 320.

The one or more first bearings 340 are disposed on the shaft 330 to support rotation of the shaft 330 about the central longitudinal axis A. The one or more first bearings 340 may include or be provided as journal bearings 341 or, in some cases, as a set of hydrodynamic foil bearings. As will be understood by one of ordinary skill in the art, the one or more first bearings 340 can have other similar configurations. In any case, the one or more first bearings 340 can include a forward first bearing 3401, which is disposed about the central section 333 and proximate to the first shoulder 334 and the first end 331, and a rear first bearing 3402, which is disposed about the central section 333 and proximate to the second shoulder 335 and the second end 332. The second bearing 350 is disposed on the rear face 312 of the rotor hub 311 of the first rotor 310 and may include or be provided as a thrust bearing 351 that is configured for primary axial load support to react to unidirectional thrust loading as shown in FIG. 3. The third bearing 360 is disposed on the forward face 313 of the rotor hub 311 of the first rotor 310 and may include or be provided as an axisymmetric thrust bearing 361 that is configured for secondary axial load support to react to instances in which axial loading switches direction from the unidirectional thrust loading shown in FIG. 3.

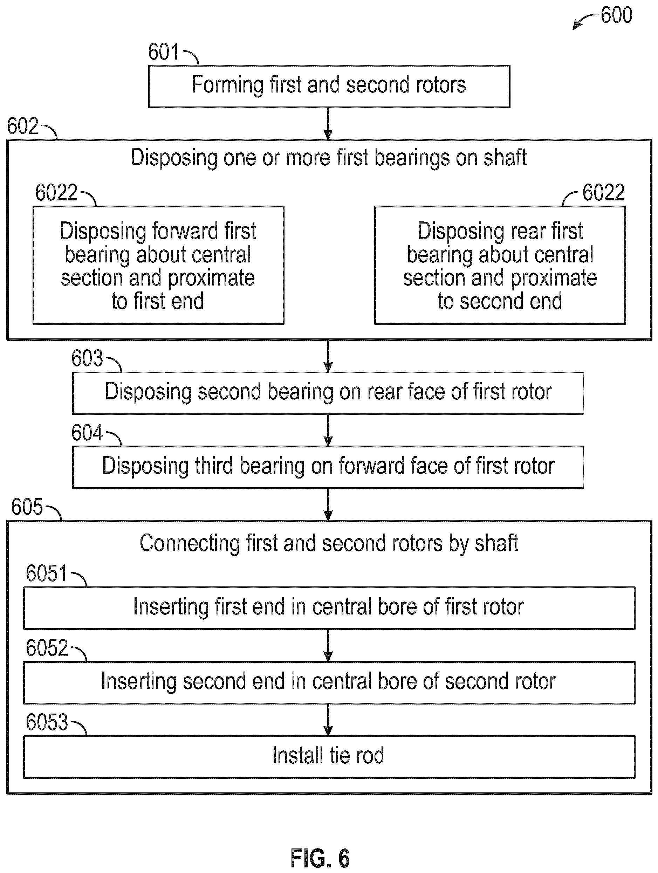

With reference to FIG. 6, a method 600 of assembling an ACM, such as the ACM 301 of FIGS. 3-5, is provided. The method 600 includes forming first and second rotors generally as described above (block 601), disposing one or more first bearings on a shaft to support shaft rotation (block 602), disposing a second bearing on the rear face of the first rotor (block 603), disposing a third bearing on the forward face of the first rotor (block 604) and connecting the first and second rotors by a shaft (block 605). The disposing of the one or more first bearings on the shaft of block 602 includes disposing a forward first bearing about the central section and proximate to the first end (block 6021) and disposing a rear first bearing about the central section and proximate to the second end (block 6022). The shaft includes first and second ends and a central section interposed between the first and second ends. The connecting of the first and second rotors by the shaft of block 605 includes inserting the first end in a central bore of the first rotor (block 6051), inserting the second end in a central bore of the second rotor (block 6052) and installing a tie rod (block 6053). As described above, the one or more first bearings may be journal bearings or, in some cases, hydrodynamic foil bearings, the second bearing may be a thrust bearing configured for primary axial load support and the third bearing may be an axisymmetric thrust bearing for secondary axial load support.

Technical effects and benefits of the present invention are the provision of an ACM assembly that maintains sufficient support for rotating components in all load conditions and that exhibits a relatively compact ACM assembly arrangement as compared to conventional arrangements.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the technical concepts in the form disclosed. Many modifications and variations will be apparent to those of ordinary skill in the art without departing from the scope of the invention as defined by the claims. The embodiments were chosen and described in order to best explain the principles of the invention and the practical application, and to enable others of ordinary skill in the art to understand the invention for various embodiments with various modifications as are suited to the particular use contemplated.

While the preferred embodiments to the invention have been described, it will be understood that those skilled in the art, both now and in the future, may make various improvements and enhancements which fall within the scope of the claims which follow. These claims should be construed to maintain the proper protection for the invention first described.

## Claims

1. An air cycle machine, ACM, comprising:
a rotor (110) comprising rear and forward faces (112, 113) and a central portion (114) interposed between the rear and forward faces (112, 113) with outwardly extending blades (115), the rotor defining a pocket (170) having an open end and forming a foil bearing shaft (175);
an inlet housing (120) partially surrounding the rotor;
an outlet housing (130) comprising a forward face (132) and a bearing support element (133) extending from the forward face and being receivable in the pocket via the open end;
one or more first bearings (140) disposed within the bearing support element to support rotation of the foil bearing shaft;
a second bearing (150) interposed between the forward face of the outlet housing and the rear face of the rotor; and
a third bearing (160) interposed between the forward face of the rotor and the inlet housing.

2. The ACM according to claim 1, wherein the inlet housing (120) partially surrounds the rotor and the third bearing (160) is interposed between the forward face of the rotor and a proximal portion of the inlet housing.

3. The ACM according to claim 1 or 2, wherein the central portion (114) has an exterior surface (116) with a non-linear profile from which the blades extend radially outwardly.

4. The ACM according to any preceding claim, wherein with the bearing support element (133) received in the pocket (170):
a first gap (G1) is defined between the forward face of the outlet housing and the rear face of the rotor and the second bearing is disposed within the first gap, and
a second gap (G2) is defined between the forward face of the rotor and the inlet housing and the third bearing is disposed within the second gap.

5. The ACM according to any preceding claim, wherein a closed end of the pocket (170) is proximate to the forward face of the rotor.

6. The ACM according to any preceding claim, wherein the one or more first bearings (140) are journal bearings, and/or wherein the second bearing (150) is a thrust bearing configured for primary axial load support, and/or wherein the third bearing (160) is an axisymmetric thrust bearing for secondary axial load support.

7. An air cycle machine, ACM, comprising:
first and second rotors (310, 320), each of the first and second rotors comprising rear and forward faces (312, 313) and a central portion (314) interposed between the rear and forward faces with outwardly extending blades (315);
a shaft (330) connecting the first and second rotors;
one or more first bearings (340) disposed on the shaft to support shaft rotation;
a second bearing (350) disposed on the rear face of the first rotor; and
a third bearing (360) disposed on the forward face of the first rotor.

8. The ACM according to claim 7, wherein the central portion (314) of each of the first and second rotors has an exterior surface (326) with a non-linear profile from which the corresponding blades extend radially outwardly.

9. The ACM according to claim 7 or 8, wherein the first and second rotors define central bores (327) and the shaft comprises:
a first end (331) receivable in the central bore of the first rotor;
a second end (332) receivable in the central bore of the second rotor; and
a central section (333) interposed between the first and second ends,
the central section comprising a first shoulder (334) that impinges against the rear face (312) of the first rotor and a second shoulder (335) that impinges against the forward face (323) of the second rotor.

10. The ACM according to claim 9, wherein the one or more first bearings comprise:
a forward first bearing (3401) disposed about the central section and proximate to the first end; and
a rear first bearing (3402) disposed about the central section and proximate to the second end.

11. The ACM according to claim 7, 8 or 9, wherein the one or more first bearings are journal bearings, and/or wherein the second bearing is a thrust bearing configured for primary axial load support, and/or wherein the third bearing is an axisymmetric thrust bearing for secondary axial load support.

12. A method of assembling an air cycle machine, ACM, the method comprising:
forming first and second rotors (310, 320), each of the first and second rotors comprising rear and forward faces (312, 313) and a central portion (314) interposed between the rear and forward faces with outwardly extending blades (315);
disposing one or more first bearings (340) on a shaft (330);
disposing a second bearing (350) on the rear face of the first rotor;
disposing a third bearing (360) on the forward face of the first rotor; and
connecting the first and second rotors by the shaft.

13. The method according to claim 12, wherein:
the shaft comprises first and second ends (331, 332) and a central section (333) interposed between the first and second ends,
the disposing of the one or more first bearings on the shaft comprises disposing a forward first bearing (3401) about the central section and proximate to the first end and disposing a rear first bearing (3402) about the central section and proximate to the second end, and
the connecting of the first and second rotors by the shaft comprises inserting the first end in a central bore of the first rotor and inserting the second end in a central bore of the second rotor.

14. The method according to claim 13, wherein the one or more first bearings are journal bearings, and/or wherein the second bearing is a thrust bearing configured for primary axial load support, and/or wherein the third bearing is an axisymmetric thrust bearing for secondary axial load support.
